# EUROPEAN PATENT SPECIFICATION

(11) **EP 2 095 027 B1**
(45) Date of publication and mention of the grant of the patent: **07.03.2018**
(21) Application number: 07848490.4
(22) Date of filing: 11.12.2007
(51) Int. Cl.: F24D 3/10, F24D 19/08, B01D 19/00

(54) **FLUID CONTAINMENT AND TRANSFER VESSEL**
FLUIDAUFNAHME UND -ÜBERTRAGUNGSBEHÄLTER
RÉSERVOIR DE CONFINEMENT ET DE TRANSFERT DE FLUIDE

(30) Priority: 13.12.2006 GB 0624921; 12.11.2007 GB 0722110
(43) Date of publication of application: 02.09.2009
(73) Proprietor: Tadpole Energy Limited, Bunratty Clare (IE)
(72) Inventor: Whetstone, Stanley, Selby, North Yorkshire Y08 5BT (IE)
(74) Representative: Harris, Oliver John Richard
(86) International application number: PCT/GB2007/004745
(87) International publication number: WO 2008/071943

(56) References cited:
- EP-A- 1 568 955
- EP-A1- 1 562 001
- US-A- 2 578 568
- US-A- 2 710 664
- US-A- 3 276 188

## Description

The invention relates to a fluid containment and transfer vessel for use with a hot water central heating system to reduce levels of entrapped and/or dissolved gases such as air, especially downstream of a boiler or other primary water heater unit. The invention further relates to a method for reducing levels of entrapped and/or dissolved air within the circulating heated liquid of a hot water central heating system by use of the above vessel, in particular fitted downstream of a boiler or other primary water heater, and especially as an after market/in situ modification thereof. The invention further relates to a circulating hot water central heating system with a vessel so fitted.

Various circulating hot water central heating systems currently exist. In its most basic form, a central heating system comprises a boiler or like primary means to heat a water-based heating liquid from a suitable water supply to be used by circulation in a space heating circuit including one or more space heaters in the form of circulated liquid radiators.

Such systems may also be combined with a system for providing domestic hot water. In these circumstances, the space heating circuit is usually called the primary heating system or circuit, and the hot water supply circuit is conventionally called the secondary heating system or circuit. The secondary heating system typically comprises an indirect hot water storage vessel within which water for domestic use may be stored and heated, either being indirectly heated from the primary circuit using water which has been heated in the boiler or other primary heater and which then flows through a coil or the like within the secondary vessel or, additionally or alternatively, by a separate secondary heating means such as a immersion heater.

The invention in particular relates to a containment and transfer vessel for use within the primary circuit, and to reduce levels of entrapped and/or dissolved gases such as air in the primary circuit, but is intended to be compatible with systems where the primary heated water is used also to heat a secondary domestic water supply.

Safety regulations for heating systems often require the incorporation of measures to accommodate the inevitable expansion of the heating liquid in the primary heater and primary circuit as it is heated by the primary heating means. Systems may do this by direct atmospheric venting. More commonly, a separate expansion or header tank may be provided forming a closed chamber into which liquid can expand, with a compressible air volume surmounting the liquid to give the necessary capability for expansion. A variation on this, to modify the primary to incorporate an integral expansion chamber to take the place of the expansion tank, has been described, for example in EP260989. The vessel of the invention is intended to be suitable for use with all such systems, but is particularly suited to those with closed expansion systems.

The primary heating means of a circulated hot water central heating system typically draws water supply from the mains, either directly or via a storage system. It is well known that a public water supply typically carries a relatively large quantity of air. It is common for a public water supply to have as much as 2.5 litres of air or more for every hundred litres of water.

Of course, the principal constituents of air, oxygen and nitrogen, are both soluble in water. The solubility of these gases in water is fundamentally dependent upon temperature and pressure, with the solubility tending to increase with rising pressure and falling temperature. Thus, the heating of water in the primary heating circuit in particular affects the solubility conditions for dissolved air quite significantly. Air will tend to come out of solution as the temperature rises. This can be a particular issue in closed systems where an air bubble within the system in a header chamber surmounting a quantity of primary liquid is used to give expansion control. For various reasons, it is desirable that the level of dissolved air within the primary liquid circulating in the system is controlled, and in particular minimised.

First, the presence of oxygen in particular is highly undesirable, particularly at the elevated temperatures involved, since it creates a potentially very aggressively corrosive environment. Hot water with a high oxygen content will be severe in attacking oxidisible metal components and surfaces within a primary circuit.
Second, high levels of any dissolved gasses, which might tend to come out of solution and form bubbles in the primary circulating liquid, are undesirable for various mechanical reasons. Dissolved air in the primary liquid can lead to pump cavitation problems as the liquid is pumped around the circuit, produce air locks within the circuit that could adversely effect heating efficiency, create undesirable noise etc.

Document EP 156 2001 A1 discloses the preamble of claim 1. It is an object of the present invention to mitigate some or all of the above problems with existing heating systems.
It is a particular object of the present invention to provide a means for the reduction of aeration levels within primary heating liquid before its circulation via a primary heating circuit in a circulated fluid heating system.

It is a particular preferred object of the invention to provide a device for de-aeration of primary liquid which is incorporated easily into existing circulated fluid heating system designs, requiring minimal modifications, and in particular is suitable for fitment in situ as an after market modification.

Thus, in accordance with the invention there is provided a fluid containment and transfer vessel according to claim 1. In use, circulated heating fluid is drawn from the outlet of the vessel of the invention, for example via a suitable circulating pump means, in the manner which will be familiar. As fluid is drawn from the outlet there is a tendency to generate a turbulent circulating flow towards the outlet. There are several mechanisms by which this can assist in the de-aeration of the fluid in the vessel.
First, it is well known as set out above that a domestic water supply such as will typically be used as the basis for the heating fluid is likely to have high levels of dissolved air. The reduced solubility of this dissolved air as the temperature rises tends to cause it to come out of solution. As fluid passes through the vessel of the invention, this gives an opportunity for this process to take place. Moreover, the turbulent flow created by the circulation in the vessel may also assist in the nucleation of bubbles. In any event, the circulating flow towards the outlet, especially with appropriately selected geometry to maximise such an effect, will tend to draw bubbles down towards the outlet.

However, in the vicinity of the outlet an escape route is provided. The first end of the conduit provided in the vessel opens generally in this region, bubbles of gas which have come out of solution in the vessel and been drawn towards this region entrained in the fluid, for example by action of the circulating flow, are able to escape into the conduit, and are thereby vented from the vessel, and for example externally to atmosphere, via the other end of the conduit.

Thus, in a preferred mode of operation, both the elevated temperature of the heating fluid and the circulation of the heating fluid in the vessel of the invention cause air dissolved therein to be released. However, in contrast with certain prior art systems, dissolved air is not simply caused to pass into the air already occupying the header region, in such a manner that might interfere with the volume of air in the header region in such a way to interfere with its ability to act as a means to accommodate expansion. Rather, the air removed from the circulating fluid is vented out of the vessel, does not interfere with air in the header region, and is for example vented to atmosphere.

It should be understood that references to upper and lower portions of the vessel are to the vessel in use, and are made for convenience only. The skilled person will readily be able to recognise, by reference to the vessel of the invention, how such references should be interpreted. The header region is higher in use, and the region designed to contain circulating fluid is lower in use. The outlet is provided in this lower fluid containing region, in the base portion of the vessel, at the centre of a base surface thereof. The inlet is provided in the header region and is offset from the centre, at a side of the vessel.
In a convenient mode of operation, circulation of the heating fluid may be caused by the action of the heating fluid entering and leaving the chamber via the respective inlet and outlet. An arrangement such as above described, where the outlet is towards a mid line, whereas the inlet is offset therefrom, and at a side of the vessel, will tend to create such a circulation in a convenient and effective manner. Additionally, the heating fluid may be circulated within the chamber by secondary agitation means within the chamber, for example in the form of an internal impeller, stirrer or the like.
The circulating action in particular tends to cause bubbles generated within the circulating fluid as air comes out of solution to be drawn towards the outlet. In this vicinity, the conduit vented externally of the vessel gives an escape route for the bubbles, which tend to rise up the conduit up to the fluid level, and then into the air volume surmounting the fluid toward the second end of the conduit which is open to the outside and thus vent outside the vessel rather than be drawn into the outlet. In this way, fluid within the vessel of the invention is de-aerated to a substantial degree before being delivered for circulation around the heating system.
Significant levels of de-aeration can be achieved in accordance with the invention. For example, the invention is used to take delivery of heated water from a primary which has drawn from a main supply. It is well known that main supply water can have a very high degree of dissolved air for a variety of reasons. For example, dissolved air levels may be as high as 2.5% and are rarely less than 1%. Although air solubility in hot water is much lower in principal, the water is typically under pressure in the system, and removing entrained air can be difficult. The invention does this admirably. Levels of dissolved air in water as low as 0.04 ml per litre have been achieved in water for delivery at the outlet for circulation around the heating system without the need for any additives, catalysts or the like. The system is able to achieve these sorts of levels of de-aeration simply by the physical effect of the circulation, and by optimising the structure to optimise that effect.

De-gassing prior to circulation offers a number of advantages, which are believed to include but not be limited to the ones set out below.

First, hot water with high levels of dissolved oxygen can be highly corrosive. Removal of most of this oxygen, down to the levels indicated, renders the hot water virtually inert, significantly reduces the oxidising nature of the environment experienced within the heating circuit, and significantly increases potential system life.

Second, reduction of dissolved air levels reduces the tendency for air bubbles to form within the system during circulation, which can generate all manner of problems during circulation including undesirable noise, air locks, pump cavitation and the like.

Third, effective de-aeration can significantly increase the efficiency of operation of the primary heating system. Improved heating efficiency is a particularly desirable feature, especially in domestic heating systems. It means that water can be raised to a circulating temperature more quickly and in a more environmentally friendly manner, for example reducing the carbon load generated by the system if it is powered by the burning of combustible fossil fuels.

In accordance with the invention, a vessel is provided as a separate unit intended to be incorporated downstream from the primary heater. The unit may be small, and may readily be adapted to simple fitment without substantive modification to existing systems, and for example as an after market modification in situ to such existing systems.

The invention is located downstream of the primary, and merely requires supply of heated fluid from the primary prior to circulation into the rest of the primary heating circuit. It therefore does not require the use of a particular, specially modified primary, and is suitable for use with a range of conventional primary heaters.

It is a particular feature of the invention, particularly effective in use in closed systems, that the air removed as the circulating fluid is de-aerated is not simply transferred into a header region air volume which is intended to provide for accommodation of expansion, in such a manner as will tend to alter the volume of gas in the header region, and thus potentially affect its ability to cope in the designed manner with such expansion. Rather, the gas product of the system as the circulating fluid is de-aerated may be taken entirely out of the system. Nevertheless, the invention is not limited to use with such closed systems.

The invention may be used with systems with or without a separate header tank or expansion vessel providing as will be familiar, a compressible air header to accommodate expansion of heating fluid in the primary.

For use in accordance with the latter mode of operation, the header region provided in the vessel of the invention can provide the air space necessary to serve as an included expansion header. In those circumstances, the header region preferably has a volumetric capacity which exceeds that required to accommodate thermal expansion of the heating liquid as it is heated in the primary. This potentially eliminates the requirements for separate expansion mechanisms, such as expansion vessels or header tanks.

In the former mode of operation, a secondary outlet is provided from the fluid region of the chamber, and for example at a side of the chamber to minimise interference with the primary outlet geometry or affect the desired circulating flow conditions too much, which secondary outlet is adapted for connection to an expansion system such as an expansion vessel, header tank or the like.

Preferably, in particular if the vessel is to be used integrally as a means to provide a compressible air header to accommodate expansion, the vessel includes pressure release means to adjust the pressure of the air in the header and/or the water level or water pressure to accommodate changes in condition during use.

For example, preferably, in particular to allow the header region of the invention to function as an expansion accommodation means, the vessel incorporates in the header region air vent means, to enable venting of air, preferably automatically from the header region to the exterior of the vessel when the level of the heating fluid within the vessel is less than a predetermined level. The venting means may include or co-operate with a means to monitor fluid level in the vessel. In this way, in use, if the fluid level in the vessel falls below a predetermined level, air within the header region is vented to atmosphere, preferably automatically, there is a reduction in pressure, and under the action of the continuous supply of fluid from the primary the fluid levels within the chamber will tend to rise to the desired predetermined level.
In the event that fluid reaching the chamber reaches the predetermined level, the air vent means is closed, in particular automatically, and the air in the header region therefore becomes a compressible fixed air bubble which can compress to accommodate expansion on heating of the liquid from the primary.
Preferably additionally the chamber incorporates in the air region and/or fluid region a pressure relief means adapted to permit air and/or fluid to be released from the vessel when the pressure therein exceeds a pre-selected limit. Such a pressure relief means may in particular be provided as a safety valve and preset to a safe maximum working pressure.

Conveniently, the chamber of the invention comprises a container of any suitable shape, one which defines geometrically a side or sides and a lower base portion with a bottom surface for location of the inlet and outlet(s) in accordance with the geometry outlined above. The container is fluidly closed save for the inlet, outlet(s), conduit opening and optional and conduit vent aperture(s) above described.
In a convenient geometry, the container exhibits rotational symmetry about a generally vertical axis in use. For example, the container may have a circular cross section, and is for example cylindrical. For some applications it might be preferable, for instance to control the circulation function, for the sides of the container to diverge outwardly from the lower to the upper portion. Preferably, the sides of the container diverge outwardly at an angle of no more than 10° to the vertical. In a particularly preferred configuration the container is circular in transverse section, being either cylindrical, or frustoconical with sides divergent in the manner indicated.
The vessel of the invention is preferably manufactured from metal or metal alloy, and for example from copper or an alloy thereof, stainless steel or the like. Alternatively, the vessel may be manufactured from a plastics or composite material. As will be familiar, the vessel may comprise an inner container fabricated as above described with an outer insulating casing.
In accordance with a further aspect of the invention, a method for the reduction of levels of entrapped and/or dissolved gases downstream of a primary heater prior to circulation of hot fluid in a circulated fluid heating system comprises the use of a vessel in accordance with the first aspect of the invention.

A conduit in accordance with the characterising portion of claim 1 extends from the vicinity of the base upwardly, through the header region to an outlet therein, towards the container top. The conduit is in particular located generally centrally, for example on a mid line of the container, such as on a central axis of a container having rotational symmetry about a generally vertical axis.
In accordance with the invention, the conduit comprises a means to allow air bubbles drawn to the vicinity of the vessel outlet to escape upwardly by virtue of their own buoyancy as flow levels reduce towards the centre of the circulating flow in the vicinity of the outlet, to rise to the liquid surface inside the conduit, and to pass into an air volume in an upper part of the conduit which is vented for example externally to atmosphere. Any suitable form of conduit may be envisaged, in particular comprising fluid tight sides and at least one channel bore acting as a conduit for escaping gas. Conveniently, the conduit comprises a pipe or like structure having pipe walls and a central bore. Multiple conduits and/or conduits with multiple bores may be provided.

In accordance with a preferred mode of operation, the vessel of the present invention is installed downstream of a primary heater, between the primary and at least a circulated fluid central heating system. The invention is also suitable for systems which additionally comprise downstream an indirect domestic hot water heating and supply system. In accordance with a further aspect of the invention there is provided a modified primary heating system for the supply of heated fluid for delivery at least to be circulated via a circulated fluid central heating system, the primary heating system comprising a primary heater defining a heating volume unit with an inlet for a water supply, a means to raise the temperature of the supplied water in the heating volume, and an outlet to supply heated fluid, which outlet is in fluid communication with an inlet of a vessel in accordance with the first aspect of the invention.

Typically, the primary heater will comprise a primary vessel defining a primary chamber for the storing of supplied water and heating of the same under the action of a heating means associated with the primary chamber. The heating means may be located within the primary chamber or positioned separately of the primary chamber with fluid stored within the primary chamber being circulated therebetween. The heating means may be of any suitable type, and is for example a conventional boiler system driven by a suitable combustible fuel supply. Additionally or alternatively the heating means may be an electrical heating system such as immersion system or the like, a heat pump system, a direct renewable source such as a solar or geothermal heat source, or any other suitable heating means.

In accordance with a further aspect of the invention, a central heating system comprises a primary heating system as above described modified to be in fluid communication with a vessel in accordance with the first aspect of the invention, and further includes a suitable fluid supply source, such as a domestic water source, upstream of and in fluid communication with the primary, and a circulating heated fluid central heating circuit downstream of and in fluid communication with the outlet of the vessel of the first aspect of the invention and comprising conduit means to circulate the heated fluid around a fluidly continuous circuit comprising at least one, radiating space heater and preferably a plurality of radiating space heaters in series and/or parallel array.

Optionally the central heating system is closed. Optionally, the central heating system includes a separate header tank providing a means to accommodate expansion of heating fluid on heating, in particular by providing a closed chamber adapted to include a compressible air header volume, which header tank is provided in fluid communication with a secondary outlet in the vessel of the first aspect of the invention. - Optionally alternatively the system is provided without a separate header tank, and the header region of the vessel of the first aspect of the invention comprises such an expansion accommodation means, the header region of the vessel of the invention providing the compressible air volume.

Conveniently, the central heating system further comprises pump means for circulating heating fluid. In a convenient mode of operation, the pump means comprises a pump located downstream of the outlet of the vessel of the first aspect of the invention so as to draw de-aerated fluid through the outlet from the chamber defined by the vessel and subsequently circulate the heating fluid around the central heating system.

The central heating system comprises a primary heating unit adapted to heat the heating fluid and at least one space heating means such as radiator for receiving circulated heating fluid. The heating unit is located upstream of the vessel of the first aspect of the invention, and the heating circuit comprising at least one space heating means is located downstream thereof. The vessel of the invention is thus easily incorporated into a conventional primary circuit.

The heating unit is adapted to deliver heating fluid to be circulated around the central heating system at an appropriate flow temperature. For example, the heating fluid is or is primarily composed of water and is heated at a familiar suitable circulating temperature, which might be 65-75°C as it leaves the primary and 45-55°C as it returns after circulating through the system.

The system preferably further comprises a water source, which is at least initially likely to be a mains water source, providing water either directly from the mains supply or via a suitable storage cistern supply.

In familiar manner, water is drawn from this supply and is permitted to flow into the primary and thus into the central heating system, and in the preferred embodiment into a closed system, at a pre-selected pressure. This predetermined pressure may comprise the domestic water supply pressure, or may be achieved by use of a pressure regulating means such as a valve or the like to adjust the domestic supply pressure, or may be achieved by the provision of a static head via a supply cistern or by any other known method.

Thus, the basic circuit of the system comprises, essentially as will be familiar save for the vessel of the first aspect of the invention, a water supply, a primary means to heat the water supply downstream thereof, a vessel in accordance with the first aspect of the invention further downstream thereof, a central heating circuit comprising at least one space heating yet further downstream, and a return conduit to return circulated fluid to the primary and complete the circuit. Valve means may be provided between each stage to prevent the back flow of circulating water to a previous stage as might happen in the event of any unintended pressure differential.

Other features of the central heating system will be readily derivable by the skilled person from common knowledge and are not specifically pertinent to the invention, which is suitable for use with most such systems. In particular, the central heating system may comprise a plurality of space heaters, for example arranged into heating zones, with suitable valve means adapted to selectively deliver heating fluid to specific heaters or zones of the central heating system. Such valve means may incorporate central or individual thermostat control means. Additionally or alternatively there may provided be mechanically or electromechanically or electronically controlled valves.

Again as will be familiar the system conveniently additionally supplies domestic hot water, for example in that the outlet of the chamber of the invention also serves to deliver, for example via a suitable junction means, heated fluid from the primary to an indirect domestic hot water heater to provide domestic hot water supply in the manner which will be familiar. Thus, typically, heating fluid passes from the junction through a suitable conduit and into a domestic hot water storage vessel where it serves to heat water within the volume defined by the storage vessel by heat transfer, and then continues to be circulated out of the vessel via a suitable return conduit to the primary.

In accordance with a further aspect of the invention, a method of modification of a central heating system for the foregoing purpose comprises the incorporation thereinto, in particular as an aftermarket fitment in situ, of a vessel in accordance with the first aspect of the invention fluidly connected in stream within the primary circuit downstream of the primary heater, and in particular comprises the incorporation thereinto of a vessel in accordance with the first aspect of the invention in accordance with the following method steps: providing a fluid containment and transfer vessel comprising a chamber defining a fluid inlet for receiving fluid from a primary heater and a separate fluid outlet for delivery of fluid at least to be circulated via a circulated fluid central heating system, the chamber adapted to contain fluid in use to such a level as to define a header region surmounting the fluid therein, wherein the inlet is provided into the header region, the outlet is provided at a base portion of the chamber, and a conduit is provided within the chamber open at either end and with a first end in the vicinity of and generally above the outlet and a second end venting out of the vessel at a higher point thereto in use; connecting the said inlet to a fluid supply in fluid communication with, and thus adapted to receive heated fluid, from the primary heater of a primary heating circuit; connecting the outlet into fluid communication with, and thus providing for the delivery of fluid to be circulated into, a circulated fluid central heating system; and optionally as above described where a separate header tank is also present, providing the vessel with a secondary outlet in the fluid container region of the vessel, and connecting said secondary outlet into fluid communication with a feed pipe for a header or expansion tank.

Thus, in accordance with the method, a vessel in accordance with the first aspect of the invention is readily fitted, for example in situ after market, to modify a conventional central heating system with all of the attendant benefits set out hereinabove.
The invention will now be described by way of example only with reference to the accompanying drawings wherein:
Figure 1 is a representation in partial cross section of a vessel in accordance with the first aspect of the invention;
Figure 2 is an example of a central heating system incorporating a variation of the vessel of Figure 1;
Figure 3 is a partial cross-section of a second embodiment of the invention;
Figure 4 is a partial cross-section of a vessel which is not part of the invention;
Figure 5 illustrates a vessel which is not part of the invention; and
Figure 6 illustrates a third aspect of the invention.
Referring first to Figure 1, a vessel (1) is shown comprising a fluid container having walls for example of copper, stainless steel or other suitable containment material. The container itself is shown in section, so that the inlet, outlets, and conduit can be seen more clearly.
The vessel defines an enclosed chamber, typically having a diameter of 150mm and a height of 200mm which in normal use will be partially filled with circulating heating fluid, so that the chamber defines a fluid filled region (12) upto a fluid level (13), and a header region (11) surmounting this. In accordance with the preferred embodiment, the header region comprises a compressible air header, and the circulating heating fluid is hot water.

Hot water circulates through the primary circuit of the heating system via the inlet (3) and the outlet (4) in the vessel (1). Hot water is drawn into the heating system via the inlet (3) which is in fluid connection with a primary heater, and then leaves the chamber via the outlet (4) which is in fluid connection with a radiator circuit, for example being drawn out of the outlet (4) by a suitable pump. The offset between the inlet (3) to the side of the vessel and the outlet (4) centrally in the base of the vessel creates a circulating flow within the water volume (12), which may optionally be assisted by circulation drivers such as paddles or the like (not present in this embodiment).

The water is at an elevated temperature, and is hence likely to be super saturated with dissolved air, as air solubility levels fall as the temperature rises. Both the elevated temperature and the agitating effect of the circulating flow in the vessel tend to cause this air to come out of solution. The circulating effect further tends to draw air bubbles down with the circulating water towards a region (7) in the vicinity of the outlet (4), and also in the vicinity of a lower end of the conduit (8). The lower end of the conduit (8) is open, and relative turbulence of the water at this point is relatively reduced, and so bubbles, having being entrained within the water and drawn down to this point, tend to escape up through the conduit to the water surface (13) within the conduit. The conduit (8) has an upward extension through the header region (11) and out via an open vent (9) through the top of the container. Thus, air which is removed from the water in the vessel as it circulates is vented directly to atmosphere rather than exchanged into the air in the header region (11).

In accordance with the illustrated embodiment, a secondary outlet (5) is provided from the water volume (12) at a side of the vessel. This secondary outlet is intended for connection into a system which has a separate expansion vessel or header tank, and will provide a supply to that expansion vessel or header tank. In an alternative mode of operation, this secondary outlet may be closed, and the volume of air in the header region (11) may itself, by virtue of its compressibility serve to accommodate expansion within the primary system.

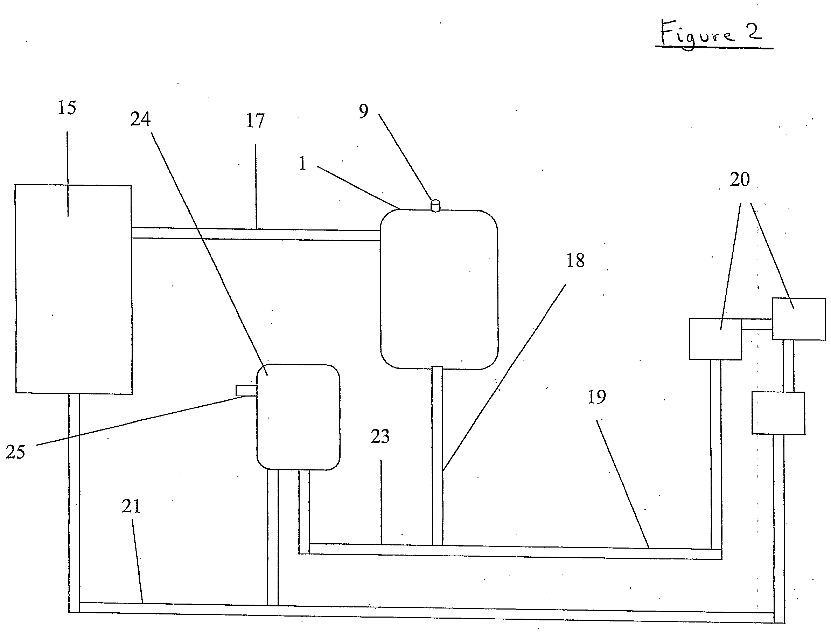

The system as a whole is shown in greater detail in Figure 2, which illustrates schematically a heating system in accordance with the invention including a primary circuit to heat several space heating radiators and a secondary circuit to heat a domestic hot water supply in familiar manner. It will be appreciated that the diagram is purely schematic, and that the relative positions and heights of components of the system should not be considered to be of significance.

Referring to the system in Figure 2, a complete closed circuit is shown including a primary heater (15) such as a boiler or the like, which receives water from a suitable standard water supply (not shown) and heat the water for circulation through the system. Heated water passes along the conduit (17) to a vessel (1) in accordance with the invention for de-aeration in the manner above described. De-aerated water is drawn through the conduit (18), for example via a suitable pump (not shown) to a junction point where water can be passed both around the primary circuit to radiators and around the secondary circuit to a hot water tank.

Referring first to the primary circuit, a conduit (19) takes heated water via space heating radiators (20) and thence via a return conduit (21) takes water of a reduced temperature having delivered at least some of its heat via the radiators to re-supply the primary (15).

In the secondary circuit a conduit (23) takes heated water to a hot water tank (24). The hot water tank stores water to be heated for a domestic hot water supply, and this is heated by heat transfer as the conduit (23) passes into the tank and through the water, for example comprising a spiral arrangement for optimising thermal transfer. A return conduit takes primary water out of the tank and back via the return conduit (21) to the primary heater (15). Secondary hot water is thus heated in the tank by heat exchange from the primary water, and can be supplied for use via the supply conduit (25).
The system in Figure 2 is shown without a separate header tank, with the vessel (1) of the invention providing a compressible header volume to serve this purpose, but as above described an alternative system with a header tank could readily be envisaged with the vessel (1) connected fluidly to the header tank via a suitable secondary aperture.

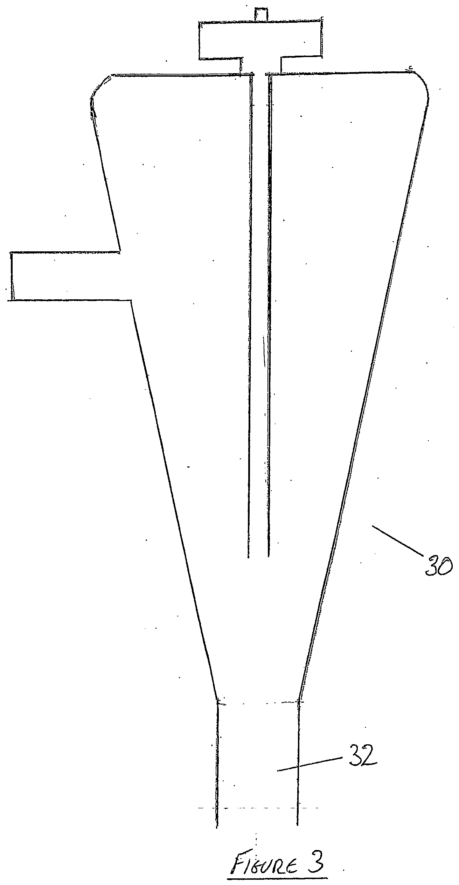

The shape of the vessel (30) shown in Figure 3 is conical which has a number of advantages. Firstly, the vortex created in the water in vessel (30) as it exits via the outlet (32) is formed more readily and can function more efficiently to remove air. Secondly, the conical shape requires less material for its construction which results in saving of materials.

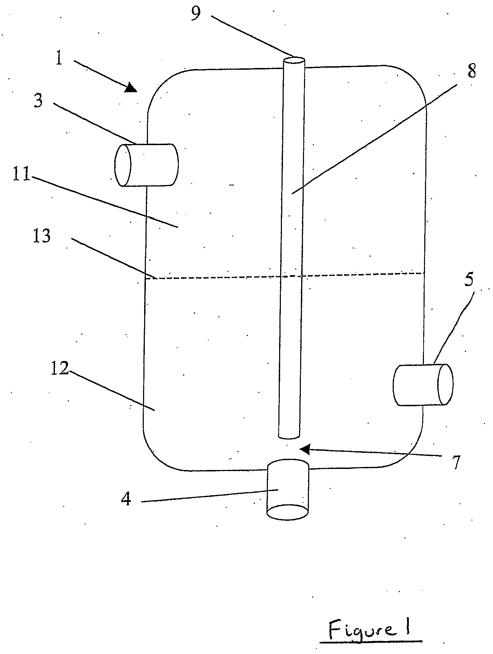

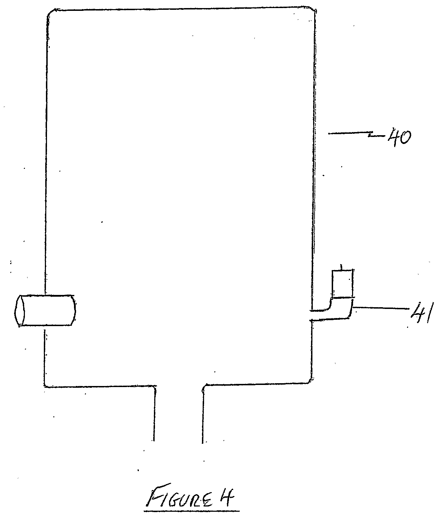

Figure 4 illustrates a vessel. The majority of the vessel (40) shown is identical to that of the vessel (1) shown in Figure 1. The conduit (8) is however replaced by a side vent (41). As the water swirls within the vessel (40) a proportion of the air is forced to the wall of the vessel (40). From here it can escape through the side vent (41) to atmosphere.
As the side vent (41) lies below the water level in the vessel (40), the side vent (41) includes a means to prevent escape of water therethrough. This is achieved by the inclusion of a suitable seal. Such a seal can take the form of a lid or of a membrane diaphragm within the side vent (41).
Although the two means to allow air to escape, the conduit (8) and the side vent (41) are shown as separate embodiments, they can be used in combination with one another.

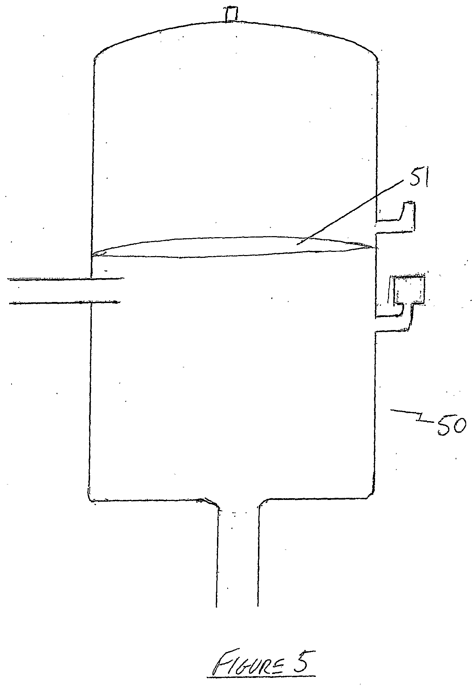

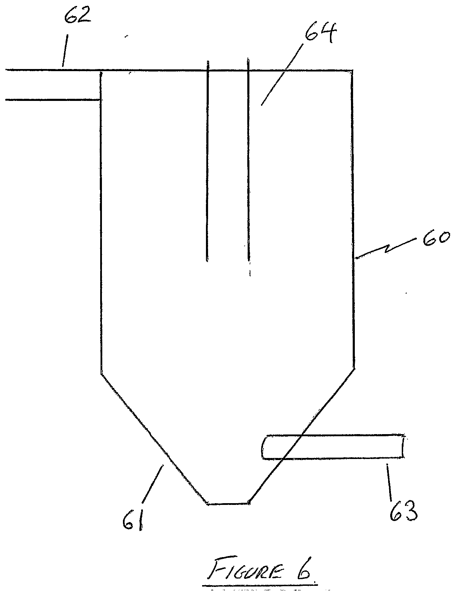

In Figure 5 is illustrated a yet further vessel. The vessel (50) which is predominantly the same as that shown in Figure 4 includes a diaphragm (51) across the interior area, above the water level. The diaphragm (51) is typically formed from a resilient material such as neoprene and is comprised of two halves welded together and fixed to the inside of the tank.
A further embodiment of a design of vessel operating in accordance with certain aspects of the invention is shown in Figure 6. The design disclosed in this Figure is for use when the vessel is smaller than indicated above, having a diameter of 50 - 60mm and a height of 105 - 115mm.
The container 60 is generally cylindrical with a conical base region 61. Water enters the container 60 via the inlet pipe 62 and exits via the outlet pipe 63. The inlet pipe 62 is so orientated relative to the container that the flow of water is approximately tangential to the flow of water and a vortex is set up within the container 60. A conduit (64), formed of a water- and air-impermeable material, extends into the inner volume of the container 60, substantially along the container's axis. As the water circulates, air separates out and exits via the conduit 64.
Thus, it can clearly be seen that the device of the invention is readily fitted within an otherwise conventional circulated water central heating and hot water supply without requiring any specific modification to the existing components. All that is necessary is that the vessel of the invention can be incorporated downstream of the primary heater and upstream of the primary circuit circulating hot water around the radiators, and of any junction to a secondary water cylinder heater where present, and of any supply to a header tank where present. The device of the invention offers a very simple way to modify existing system designs, and in particular to modify existing systems in situ, to achieve significant levels of de-aeration of water in the primary purely through physical means without the need for additives, catalysts or the like, with all of the attendant advantages set out above. Additionally where, in a secondary circuit, the draw off for hot water is separated from the cylinder by a large distance, for example 15 m, then energy loss can be decreased through the incorporation of a device according to the invention. The device can be fitted upstream of the impeller of the pump and in so doing water temperature drops of less than 5°C are obtained.

## Claims

1. A fluid containment and transfer vessel (1) comprising a chamber defining a fluid inlet (3) for receiving fluid from a primary heater and a separate fluid outlet (4) for delivery of fluid at least to be circulated via a circulated fluid central heating system, the chamber adapted to contain fluid in use to such a level as to define a header region (11) surmounting the fluid therein, wherein the fluid is water, the inlet (3) is provided into the header region (11), the outlet (4) is provided at a base portion of the chamber, the inlet is to the side of the vessel and the outlet centrally in the base surface of the vessel so as to create an offset between the two, and a conduit (8) is provided within the chamber open at either end and with a first end in the vicinity of and generally above the outlet and a second end venting out of the vessel at a higher point thereto in use.

2. A vessel in accordance with claim 1 wherein the heating fluid is circulated within the chamber by secondary agitation means within the chamber.

3. A vessel in accordance with any preceding claim wherein a secondary outlet (5) is provided from the fluid region of the chamber, which secondary outlet is adapted for connection to an expansion vessel or header tank.

4. A vessel in accordance with any preceding claim including pressure release means to adjust the pressure of the air in the header region or the water level or water pressure to accommodate changes in condition during use.

5. A vessel in accordance with claim 4 incorporating in the header region air vent means to enable venting of air from the header region to the exterior of the vessel when the level of the heating fluid within the vessel is less than a predetermined level.

6. A vessel in accordance with any preceding claim wherein the container has circular cross section, being cylindrical or frustoconical with the sides of the container diverging outwardly from the lower to the upper portion at an angle of no more than 10° to the vertical.

7. A central heating system comprising a primary heating system modified to be in fluid communication with a vessel (1) in accordance with one of claims 1 to 6 and further including a suitable fluid supply source upstream of and in fluid communication with the primary heating system, and a circulating heated fluid central heating circuit downstream of and in fluid communication with the outlet of the vessel and comprising conduit means to circulate the heated fluid around a fluidly continuous circuit comprising at least one radiating space heater.

8. A system in accordance with claim 7 wherein the central heating system includes a separate header tank providing a means to accommodate expansion of heating fluid on heating, which header tank is provided in fluid communication with a secondary outlet in the vessel (1).

9. A system in accordance with claim 7 wherein the system is provided without a separate header tank, and the header region of the vessel comprises an expansion accommodation means.

10. A system in accordance with one of claims 7 to 9 further comprising pump means for circulating heating fluid including a pump located downstream of the outlet of the vessel so as to draw de-aerated fluid through the outlet from the chamber defined by the vessel and subsequently circulate the heating fluid around the central heating system.

11. A central heating system comprising a primary circuit and a fluid containment and transfer vessel (1) according to claim 1, wherein the water circulates in the primary circuit of the central heating system, and the header region has a volume which exceeds that required to accommodate thermal expansion of the waster as it is heated in the primary circuit.

## Patentansprüche

1. Fluidaufnahme- und -übertragungsgefäß (1), das eine Kammer umfasst, die einen Fluideinlass (3) zum Erhalten von Fluid von einem primären Heizgerät und einen separaten Fluidauslass (4) zur Abgabe von Fluid, das zumindest mittels einer Fluidzirkulationszentralheizungsanlage zirkuliert werden soll, definiert, wobei die Kammer dazu eingerichtet ist, Fluid im Gebrauch auf einem derartigen Pegel aufzunehmen, um eine Kopfregion (11) zu definieren, die das Fluid darin überragt, wobei das Fluid Wasser ist, der Einlass (3) in der Kopfregion (11) vorgesehen ist, der Auslass (4) an einem Basisabschnitt der Kammer vorgesehen ist, der Einlass zu der Seite des Gefäßes ist und der Auslass zentral in der Basisfläche des Gefäßes ist, um einen Versatz zwischen den beiden zu erzeugen, und eine Rohrleitung (8) innerhalb der Kammer vorgesehen ist, die an beiden Enden offen ist und ein Ende in der Nähe und im Allgemeinen oberhalb des Auslasses und ein zweites Ende, das im Gebrauch von dem Gefäß an einem höheren Punkt dazu entlüftet, aufweist.

2. Gefäß nach Anspruch 1, wobei das Heizfluid innerhalb der Kammer durch sekundäre Bewegungsmittel innerhalb der Kammer zirkuliert wird.

3. Gefäß nach einem vorhergehenden Anspruch, wobei ein sekundärer Auslass (5) von der Fluidregion der Kammer vorgesehen ist, wobei dieser sekundäre Auslass zum Anschluss an ein Ausdehnungsgefäß oder Kopftank eingerichtet ist.

4. Gefäß nach einem vorhergehenden Anspruch, das Druckentspannungsmittel beinhaltet, um den Druck der Luft in der Kopfregion oder den Wasserpegel oder den Wasserdruck zu justieren, um Bedingungsveränderungen im Gebrauch zu berücksichtigen.

5. Gefäß nach Anspruch 4, das in der Kopfregion Entlüftungsmittel integriert, um ein Entlüften von Luft aus der Kopfregion zu der Außenseite des Gefäßes zu ermöglichen, wenn der Pegel des Heizfluids innerhalb des Gefäßes niedriger als ein vorherbestimmter Pegel ist.

6. Gefäß nach einem vorhergehenden Anspruch, wobei der Behälter einen kreisförmigen Querschnitt aufweist, zylindrisch oder kegelstumpfförmig ist, wobei die Seiten des Behälters von dem unteren zu dem oberen Abschnitt nach außen in einem Winkel von nicht mehr als 10° zu der Vertikalen auseinandergehen.

7. Zentralheizungsanlage, die ein primäres Heizsystem umfasst, das dazu modifiziert ist, in Fluidverbindung mit einem Gefäß (1) nach einem der Ansprüche 1 bis 6 zu sein, und weiterhin eine geeignete Fluidversorgungsquelle, die stromaufwärts des primären Heizsystems ist und in Fluidverbindung mit diesem ist, und einen Zentralheizungskreislauf mit zirkulierendem erhitztem Fluid beinhaltet, der stromabwärts des Auslasses des Gefäßes und in Fluidverbindung mit diesem ist und Rohrleitungsmittel umfasst, um das erhitzte Fluid um einen fluidkontinuierlichen Kreislauf zu zirkulieren, der mindestens ein Strahlungsraumheizgerät umfasst.

8. Anlage nach Anspruch 7, wobei die Zentralheizungsanlage einen separaten Kopftank beinhaltet, der ein Mittel zum Berücksichtigen einer Ausdehnung von Heizfluid beim Erhitzen bereitstellt, wobei dieser Kopftank in Fluidverbindung mit einem sekundären Auslass des Gefäßes (1) vorgesehen ist.

9. Anlage nach Anspruch 7, wobei die Anlage ohne einen separaten Kopftank vorgesehen ist und die Kopfregion des Gefäßes ein Ausdehnungsberücksichtigungsmittel umfasst.

10. Anlage nach einem der Ansprüche 7 bis 9, die weiterhin Pumpmittel zum Zirkulieren von Heizfluid umfasst, die eine Pumpe beinhalten, die sich stromabwärts des Auslasses des Gefäßes befindet, um entlüftetes Fluid durch den Auslass aus der Kammer, die von dem Gefäß definiert wird, zu ziehen und anschließend das Heizfluid um die Zentralheizungsanlage zu zirkulieren.

11. Zentralheizungsanlage, die einen primären Kreislauf und ein Fluidaufnahme- und -übertragungsgefäß (1) nach Anspruch 1 umfasst, wobei das Wasser in dem primären Kreislauf der Zentralheizungsanlage zirkuliert und die Kopfregion ein Volumen aufweist, das das Volumen übersteigt, das zur Berücksichtigung einer Wärmeausdehnung des Wassers erforderlich ist, wenn es in dem primären Kreislauf erhitzt wird.

## Revendications

1. Réservoir de confinement et de transfert de fluide (1) comportant une chambre définissant un orifice d'entrée de fluide (3) servant à recevoir un fluide en provenance d'un dispositif de chauffage primaire et un orifice de sortie de fluide séparé (4) à des fins de distribution de fluide destiné au moins à être circulé par le biais d'un système de chauffage central à circulation de fluide, la chambre étant adaptée pour contenir un fluide lors de l'utilisation à un niveau tel servant à définir une région collectrice (11) surmontant le fluide dans celle-ci, dans lequel le fluide est de l'eau, l'orifice d'entrée (3) est mis en oeuvre dans la région collectrice (11), l'orifice de sortie (4) est mise en oeuvre au niveau d'une partie formant base de la chambre, l'orifice d'entrée se trouve sur le côté du réservoir et l'orifice de sortie se trouve au niveau d'une partie centrale dans la surface de base du réservoir de manière à créer un décalage entre les deux, et une conduite (8) est mise en oeuvre à l'intérieur de la chambre ouverte au niveau de l'une ou l'autre extrémité, une première extrémité se trouvant à proximité et généralement au-dessus de l'orifice de sortie et une deuxième extrémité permettant une évacuation hors du réservoir au niveau d'un point se trouvant plus haut par rapport à celui-ci lors de l'utilisation.

2. Réservoir selon la revendication 1, dans lequel le fluide de chauffage est circulé à l'intérieur de la chambre par un moyen d'agitation secondaire à l'intérieur de la chambre.

3. Réservoir selon l'une quelconque des revendications précédentes, dans lequel un orifice de sortie secondaire (5) est mis en oeuvre depuis la région de fluide de la chambre, orifice de sortie secondaire qui est adapté à des fins de connexion sur un vase d'expansion ou un réservoir collecteur.

4. Réservoir selon l'une quelconque des revendications précédentes, comprenant un moyen régulateur de pression servant à ajuster la pression de l'air dans la région collectrice ou le niveau d'eau ou la pression de l'eau en fonction de changements de condition lors de l'utilisation.

5. Réservoir selon la revendication 4, incorporant, dans la région collectrice, des moyens d'évacuation d'air permettant l'évacuation de l'air depuis la région collectrice jusqu'à l'extérieur du réservoir quand le niveau du fluide de chauffage dans le réservoir est inférieur à un niveau prédéterminé.

6. Réservoir selon l'une quelconque des revendications précédentes, dans lequel le contenant a une section en coupe circulaire, qui est cylindrique ou tronconique, les côtés du contenant allant en divergeant vers l'extérieur depuis la partie inférieure jusqu'à la partie supérieure selon un angle ne faisant pas plus de 10° par rapport à la verticale.

7. Système de chauffage central comportant un système de chauffage primaire modifié pour être en communication fluidique avec un réservoir (1) selon l'une quelconque des revendications 1 à 6 et comprenant par ailleurs une source d'alimentation en fluide appropriée en amont par rapport au système de chauffage primaire et en communication fluidique avec celui-ci, et un circuit de chauffage central à circulation de fluide chauffé en aval par rapport à l'orifice de sortie du réservoir et en communication fluidique avec celui-ci et comportant un moyen formant conduite servant à faire circuler le fluide chauffé autour d'un circuit à continuité fluide comportant au moins un dispositif de chauffage autonome à chaleur rayonnante.

8. Système selon la revendication 7, dans lequel le système de chauffage central comprend un réservoir collecteur séparé mettant en oeuvre un moyen servant à permettre l'expansion du fluide de chauffage lors du chauffage, réservoir collecteur qui est mis en oeuvre en communication fluidique avec un orifice de sortie secondaire dans le réservoir (1).

9. Système selon la revendication 7, dans lequel le système est mis en oeuvre sans réservoir collecteur séparé, et la région collectrice du réservoir comporte un moyen permettant l'expansion.

10. Système selon l'une quelconque des revendications 7 à 9, comportant par ailleurs un moyen formant pompe servant à faire circuler le fluide de chauffage comprenant une pompe située en aval par rapport à l'orifice de sortie du réservoir de manière à aspirer le fluide désaéré au travers de l'orifice de sortie en provenance de la chambre définie par le réservoir et servant ultérieurement à faire circuler le fluide de chauffage dans l'ensemble du système de chauffage central.

11. Système de chauffage central, comportant un circuit primaire et un réservoir de confinement et de transfert de fluide (1) selon la revendication 1, dans lequel l'eau circule dans le circuit primaire du système de chauffage central, et la région collectrice a un volume qui est supérieur au volume requis pour permettre l'expansion thermique de l'eau alors que celle-ci est chauffée dans le circuit primaire.
